(19) Europäisches Patentamt
European Patent Office
Office européen des brevets

(11) **EP 2 584 673 A1**

(12) **EUROPEAN PATENT APPLICATION**

(43) Date of publication:
**24.04.2013 Bulletin 2013/17**

(51) Int Cl.:
***H02K 5/24*** *(2006.01)*

(21) Application number: **11185420.4**

(22) Date of filing: **17.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Oy**
**00380 Helsinki (FI)**

(72) Inventors:
• **Roivainen, Janne**
**04340 Tuusula (FI)**

• **Mantere, Juhani**
**04300 Tuusula (FI)**
• **Szucs, Aron**
**00370 Helsinki (FI)**

(74) Representative: **Parta, Ari Petri**
**Kolster Oy Ab**
**Iso Roobertinkatu 23**
**P.O. Box 148**
**00121 Helsinki (FI)**

(54) **Electric machine with dampening means**

(57)     An electric machine comprising two main components, the two main components being a rotor (2) and a stator (4), and dampening means for dampening vibrations of a vibration-prone component, the vibration-prone component being one of the main components. The dampening means comprises a first damper (10; 10'; 10"; 110) having a first constraint element (12; 12'; 12") and a first visco-elastic layer (14; 14'; 14") provided on a surface of the first constraint element (12; 12'; 12"), the first constraint element (12; 12'; 12") being connected to the vibration-prone component through the first visco-elastic layer (14; 14'; 14").

Fig. 1

EP 2 584 673 A1

## Description

FIELD OF THE INVENTION

The present invention relates to suppression of vibrations in a rotating electric machine.

Vibrations of a rotating electric machine may have several different sources such as unbalance in a rotor, magnetic forces due to imperfect magnetic design, external excitation, or magnetic forces caused by air-gap anomalies due to overhang of an outer main component of the rotating electric machine combined with gravitational pull.

Vibrations cause significant problems in known rotating electric machines. Vibrations may cause excessive noise. Vibrations may also shorten operating life of rotating electric machines.

BACKGROUND OF THE INVENTION

The invention utilizes a constrained-layer damping technique which is described for example in following documents.

[1] Cremer, L. & Heckl, M. & Ungar, E.E., 1987. Structure-Borne Sound. 2nd ed. Berlin: Springer Verlag.
[2] Ewins, D.J., 2001. Modal Testing, Theory, Practice, and Application. 2nd ed. Hertfordshire, England: Research Studies Press ltd.
[3] Garibaldi, L. & Onah, H.N., 1996. Viscoelastic Material Damping Technology. Torino: Becchis Osiride.

There exist a great number of mathematical formulations to describe the dampening mechanisms of a material. Herein, a hysteretical damping model is used. The hysteretical damping model is also called as a structural damping model. For hysteretically damped isotropic material, the complex Young's modulus E* and Shear modulus G* are defined as

$$E^* = E(1+j\eta)$$

$$G^* = G(1+j\eta),$$

where E is the real Young's modulus, G is the real shear modulus and $\eta$ is the material loss factor. Above definitions can be found in reference [3], on page 30.

BRIEF DESCRIPTION OF THE INVENTION

An object of the present invention is to provide an electric machine so as to alleviate the above vibration problems. The object of the invention is achieved by an electric machine which is characterized by what is stated in the independent claim 1. The preferred embodiments of the invention are disclosed in the dependent claims.

The invention is based on the idea of providing a vibration-prone component of an electric machine with one or more dampers utilizing constrained-layer damping technique.

An advantage of the invention is that vibrations of an electric machine may be suppressed thereby reducing noise and extending the operating life of the electric machine.

BRIEF DESCRIPTION OF THE DRAWINGS

In the following the invention will be described in greater detail by means of preferred embodiments with reference to the attached drawings, in which

Figure 1 shows a cross section of an electric machine according to an embodiment of the present invention;
Figure 2A shows dampening means of the electric machine of Figure 1;
Figure 2B shows dampening means of an electric machine according to further embodiment of the present invention;
Figure 2C shows dampening means of an electric machine according to another embodiment of the present invention; and
Figure 3 shows a cross section of an electric machine according to yet another embodiment of the present invention;

DETAILED DESCRIPTION OF THE INVENTION

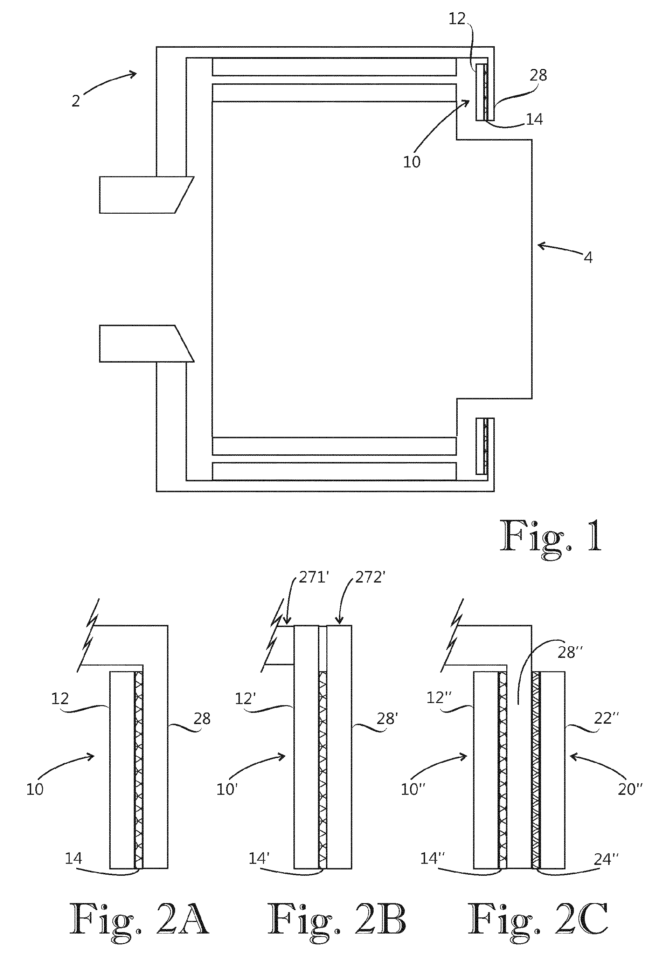

Figure 1 shows an electric machine comprising a rotor 2 and a stator 4, and dampening means for dampening vibrations of a vibration-prone component, which in the embodiment of Figure 1 is the rotor 2. Herein the rotor 2 and the stator 4 are called two main components of the electric machine.

Figure 2A is an enlargement showing dampening means of the electric machine of Figure 1. The dampening means comprises a first damper 10 having a first constraint element 12 and a first visco-elastic layer 14 provided on a surface of the first constraint element 12, the first constraint element 12 being connected to the vibration-prone component through the first visco-elastic layer 14. The first constraint element 12 is a monolithic element having a form of an annular ring. The first constraint element 12 may be manufactured from steel or aluminium, for example. In embodiments where it is not possible to construct a first constraint element as a monolithic element, the parts of the first constraint element should be joined together rigidly.

The rotor 2 comprises an annular end plate 28,

the first damper 10 being connected to the annular end plate 28. The annular end plate 28 may be made of steel or aluminium. A symmetry axis of the annular end plate 28 coincides with rotation axis of the rotor 2.

The proper design method, also known as Master Curve Procedure using International Plot, for optimizing the damping capacity vs. temperature and frequency is explained thoroughly in reference [3], on pages 101-110. The reference [3], which is identified in section Background of the Invention, discloses that the material loss factor has a property of reaching a maximum value at certain temperature and frequency. In other words the material loss factor is a function on temperature and frequency.

To ensure an adequate damping capacity of the first damper 10 maximum loss factor $\eta_{fvel\_max}$ of the first visco-elastic layer 14 is greater than or equal to 0,7. Both the maximum loss factor $\eta_{fce\_max}$ of the first constraint element 12 and the maximum loss factor $n_{vp\_max}$ of the vibration-prone component are substantially less than the maximum loss factor $n_{fvel\_max}$ of the first visco-elastic layer 14.

In an alternative embodiment maximum loss factor of the first visco-elastic layer is greater than or equal to 0,9. Basically, the higher the maximum loss factor of a visco-elastic layer is the more effective the damping is.

In the embodiment shown in Figure 1 the vibration-prone component is a one-piece component, the annular end plate 28 being an integral part of the vibration-prone component. The first constraint element 12 is connected to the vibration-prone component exclusively through the first visco-elastic layer 14. There are no bolts, screws or other stiff particles connecting the first constraint element 12 to the vibration-prone component. The first visco-elastic layer 14 is a one-piece layer.

Figure 2B shows dampening means of an electric machine according to further embodiment of the present invention. In Figure 2B the vibration-prone component comprises a first portion 271' and a second portion 272', the first damper 10' being located between the first portion 271' of the vibration-prone component and the second portion 272' of the vibration-prone component such that the first damper 10' separates the first portion 271' of the vibration-prone component from the second portion 272' of the vibration-prone component, the second portion 272' of the vibration-prone component being connected to the first constraint element 12' through the first visco-elastic layer 14'. The first portion 271' of the vibration-prone component comprises a cylindrical body. The first constraint element 12' is joined rigidly to the first portion 271' of the vibration-prone component for example by welding or by screws. Alternatively the first constraint element 12' may be an integral part of the first portion 271' of the vibration-prone component. The second portion 272' of the vibration-prone component comprises an annular end plate 28'.

Figure 2C shows dampening means of an electric machine according to another embodiment of the present invention. The dampening means of Figure 2C comprises a first damper 10" and a second damper 20" connected to an annular end plate 28" of a vibration-prone component. The first damper 10" includes a first constraint element 12" and a first visco-elastic layer 14" provided on a surface of the first constraint element 12", the first constraint element 12" being connected to the annular end plate 28" through the first visco-elastic layer 14". The second damper 20" comprises a second constraint element 22" and a second visco-elastic layer 24" provided on a surface of the second constraint element 22", the second constraint element 22" being connected to the vibration-prone component through the second visco-elastic layer 24". Both the first constraint element 12" and the second constraint element 22" are substantially annular components. The annular end plate 28" is sandwiched between the first damper 10" and the second damper 20".

Both the maximum loss factor $\eta_{fvel-2\_max}$ of the first visco-elastic layer 14" and the maximum loss factor $\eta_{svel-2\_max}$ of the second visco-elastic layer 24" are greater than or equal to 0,7. The maximum loss factor $\eta_{fce-2\_max}$ of the first constraint element 12", the maximum loss factor $\eta_{sce-2}$ of the second constraint element 22" and the maximum loss factor $\eta_{vpc-2\_max}$ of the vibration-prone component each are substantially less than 0,7.

The first damper 10" is optimized for a first temperature $T_1$ and a first frequency $f_1$. The second damper 20" is optimized for a second temperature $T_2$ and a second frequency $f_2$. The second temperature $T_2$ is different from the first temperature $T_1$, and the second frequency $f_2$ is different from the first frequency $f_1$. Herein a damper is considered to be optimized for a certain temperature and a certain frequency if the material loss factor of the visco-elastic layer of the damper reaches its maximum value at said temperature and frequency.

Dampening means comprising a plurality of dampers may be configured such that each of the dampers is optimized for a different temperature-frequency pair than rest of the dampers. Thereby maximum dampening range of the dampening means may be widened.

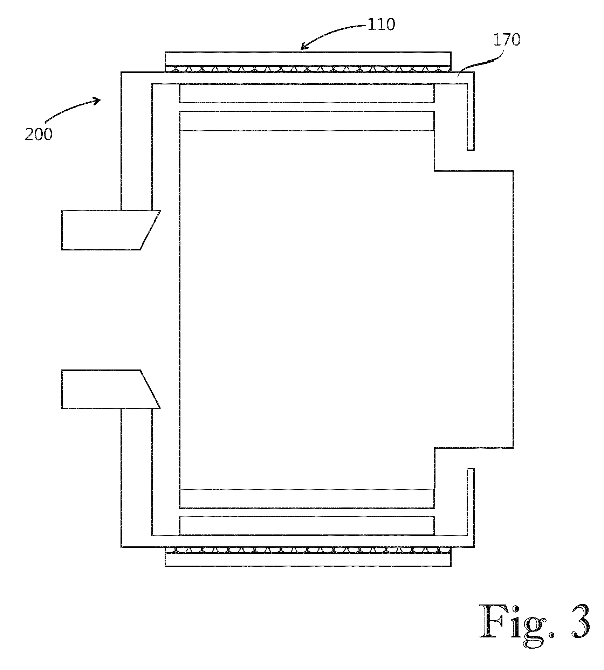

In alternative embodiments dampening means may comprise one or more dampers connected to a part other than an annular end plate. In the embodiment shown in Figure 3 a rotor 200 comprises a cylindrical body 170, a first damper 110 being connected to an outer circumferential surface of the cylindrical body 170. In an alternative embodiment a damper may be connected to an inner circumferential surface of a cylindrical body of a vibration-prone component.

In embodiments shown in Figures 1 to 3, the vibration-prone component is an outer rotor. Herein an outer rotor refers to a rotor that is located farther from centre line of an electric machine than the stator of the electric machine. In an alternative embodiment the vibration-prone component is an outer stator. In further alternative embodiments the vibration-prone component may be an inner rotor or an inner stator. It is also possible to equip both main components of an electric machine with one or more dampers.

An electric machine according to present invention may be configured as an electric generator of a wind power plant. In one embodiment the vibration-prone component is an outer rotor of an electric generator of a wind power plant, the outer rotor being in direct contact with the surrounding air. An electric machine according to present invention may also be configured as an electric motor adapted to be used in heavy steel industry, such as a belt-roller motor.

It will be obvious to a person skilled in the art that the inventive concept can be implemented in various ways. The invention and its embodiments are not limited to the examples described above but may vary within the scope of the claims.

## Claims

1. An electric machine comprising two main components, the two main components being a rotor (2) and a stator (4), and dampening means for dampening vibrations of a vibration-prone component, the vibration-prone component being one of the main components, **characterized in that** the dampening means comprises a first damper (10; 10'; 10"; 110) having a first constraint element (12; 12'; 12") and a first visco-elastic layer (14; 14'; 14") provided on a surface of the first constraint element (12; 12'; 12"), the first constraint element (12; 12'; 12") being connected to the vibration-prone component through the first visco-elastic layer (14; 14'; 14").

2. An electric machine according to claim 1, **characterized in that** the maximum loss factor ($\eta_{fvel\_max}$) of the first visco-elastic layer (14; 14'; 14") is greater than or equal to 0,7.

3. An electric machine as claimed in claim 1 or 2, **characterized in that** the maximum loss factor ($\eta_{fce\_max}$) of the first constraint element (12; 12'; 12") is substantially less than the maximum loss factor ($\eta_{fvel\_max}$) of the first visco-elastic layer (14; 14'; 14").

4. An electric machine as claimed in claim 1, 2 or 3, **characterized in that** the maximum loss factor ($\eta_{vpc\_max}$) of the vibration-prone component is substantially less than the maximum loss factor ($\eta_{fvel\_max}$) of the first visco-elastic layer (14; 14'; 14").

5. An electric machine as claimed in any one of the preceding claims, **characterized in that** the vibration-prone component is the outer one of the main components.

6. An electric machine as claimed in claim 5, **characterized in that** the vibration-prone component is an outer rotor.

7. An electric machine as claimed in claim 6, **characterized in that** the outer rotor comprises an annular end plate (28), the first damper (10) being connected to the annular end plate (28).

8. An electric machine as claimed in any one of claims 1 to 6, **characterized in that** the vibration-prone component comprises a cylindrical body (170), the first damper (110) being connected to a circumferential surface of the cylindrical body (170).

9. An electric machine as claimed in any one of the preceding claims, **characterized in that** the first constraint element (12; 12'; 12") is a monolithic element.

10. An electric machine as claimed in any one of the preceding claims, **characterized in that** the first constraint element (12; 12") is connected to the vibration-prone component exclusively through the first visco-elastic layer (14; 14").

11. An electric machine as claimed in any one of claims 1 to 9, **characterized in that** the vibration-prone component comprises a first portion (271') and a second portion (272'), the first damper (10') being located between the first portion (271') of the vibration-prone component and the second portion (272') of the vibration-prone component such that the first damper (10') separates the first portion (271') of the vibration-prone component from the second portion (272') of the vibration-prone component, the second portion (272') of the vibration-prone component being connected to the first constraint element (12') through the first visco-elastic layer (14').

12. An electric machine as claimed in any one of the preceding claims, **characterized in that** the dampening means further comprises a second damper (20") having a second constraint element (22") and a second visco-elastic layer (24") provided on a surface of the second constraint element (22"), the second constraint element (22") being connected to the vibration-prone component through the second visco-elastic layer (24").

13. An electric machine according to claim 12, **characterized in that** the first damper (10") is optimized for a first temperature ($T_1$) and a first frequency ($f_1$), and the second damper (20") is optimized for a second temperature ($T_2$) and a second frequency ($f_2$), the second temperature ($T_2$) being different from the first temperature ($T_1$), and the second frequency ($f_2$) being different from the first frequency ($f_1$).

**14.** A wind power plant for converting wind energy into electric energy, the wind power plant comprising an electric generator, **characterized in that** the electric generator is an electric machine according to any one of claims 1 to 13.

Fig. 1

Fig. 2A    Fig. 2B    Fig. 2C

Fig. 3

Europäisches
Patentamt

European
Patent Office

Office européen
des brevets

## EUROPEAN SEARCH REPORT

Application Number

EP 11 18 5420

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 96/37031 A1 (SIEMENS AG [DE]; DREXLMAIER THOMAS [DE]; GOEB WERNER [DE]; KRAEMER RAL) 21 November 1996 (1996-11-21) | 1,3-12, 14 | INV. H02K5/24 |
| Y | * page 3, line 5 - line 23; figure 1 * ----- | 2,13 | |
| A | M. D. RAO: "RECENT APPLICATIONS OF VISCOELASTIC DAMPING FOR NOISE CONTROL IN AUTOMOBILES AND COMMERCIAL AIRPLANES", JOURNAL OF SOUND AND VIBRATION, [Online] vol. 262, 28 March 2003 (2003-03-28), pages 457-474, XP002676402, * page 457 - page 460; figure 2 * ----- | 1 | |
| X | US 6 512 314 B1 (NAKANISHI MOTOYASU [JP]) 28 January 2003 (2003-01-28) * abstract * * column 9, line 63 - column 10, line 12; figure 11 * ----- | 1 | |
| X | US 6 328 274 B1 (HAYASHI EIICHI [JP]) 11 December 2001 (2001-12-11) * column 3, line 55 - column 4, line 5; figure 5 * * page 5, line 43 - line 59 * ----- | 1 | TECHNICAL FIELDS SEARCHED (IPC) H02K |
| Y | US 6 499 209 B1 (LANDIN DONALD T [US] ET AL) 31 December 2002 (2002-12-31) * column 8, line 41 - line 53 * ----- | 2,13 | |

The present search report has been drawn up for all claims

| Place of search | Date of completion of the search | Examiner |
|---|---|---|
| The Hague | 23 May 2012 | Zoukas, Eleftherios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 18 5420

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2012

| Patent document cited in search report | | Publication date | Patent family member(s) | | Publication date |
|---|---|---|---|---|---|
| WO 9637031 | A1 | 21-11-1996 | EP<br>WO | 0826262 A1<br>9637031 A1 | 04-03-1998<br>21-11-1996 |
| US 6512314 | B1 | 28-01-2003 | NONE | | |
| US 6328274 | B1 | 11-12-2001 | JP<br>US | 11287294 A<br>6328274 B1 | 19-10-1999<br>11-12-2001 |
| US 6499209 | B1 | 31-12-2002 | EP<br>JP<br>US<br>US<br>WO | 1040548 A1<br>2001527375 A<br>6191510 B1<br>6499209 B1<br>9933156 A1 | 04-10-2000<br>25-12-2001<br>20-02-2001<br>31-12-2002<br>01-07-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CREMER, L. ; HECKL, M. ; UNGAR, E.E.** Structure-Borne Sound. Springer Verlag, 1987
- **EWINS, D.J.** Modal Testing, Theory, Practice, and Application. Research Studies Press ltd, 2001
- **GARIBALDI, L. ; ONAH, H.N.** Viscoelastic Material Damping Technology. *Torino: Becchis Osiride,* 1996